# EUROPEAN PATENT APPLICATION

(11) **EP 2 590 417 A1**
(43) Date of publication of application: **08.05.2013**
(21) Application number: 12190427.0
(22) Date of filing: 29.10.2012
(51) Int. Cl.: H04N 13/00

(54) **Stereoscopic image display apparatus**

(30) Priority: 01.11.2011 TW 100139720; 01.11.2011 TW 100139724
(71) Applicant: Acer Incorporated, Taipei Hsien 221 (TW)
(72) Inventor: Ko, Chueh-Pin, 221 Taipei Hsien (TW)
(74) Representative: Michalski Hüttermann & Partner Patentanwälte

(57) **Abstract**

A dynamic depth image generating method is provided. The method has the following steps of: receiving at least one input image; determining whether a current image of the input images is a still image; and when the current image is the still image, retrieving a depth image corresponding to the current image and applying a plurality of image profiles to the depth image correspondingly to generate a plurality of dynamic depth images.

## Description

### CROSS REFERENCE TO RELATED APPLICATIONS

This Application claims priority of Taiwan Patent Application No. 100139724 and No. 100139720, filed on Nov. 1, 2011, the entirety of which is incorporated by reference herein.

### BACKGROUND OF THE INVENTION

### Field of the Invention

The present invention relates to image processing, and in particular relates to devices and methods to improve visual effects by adjusting depth images and two-dimensional images.

### Description of the Related Art

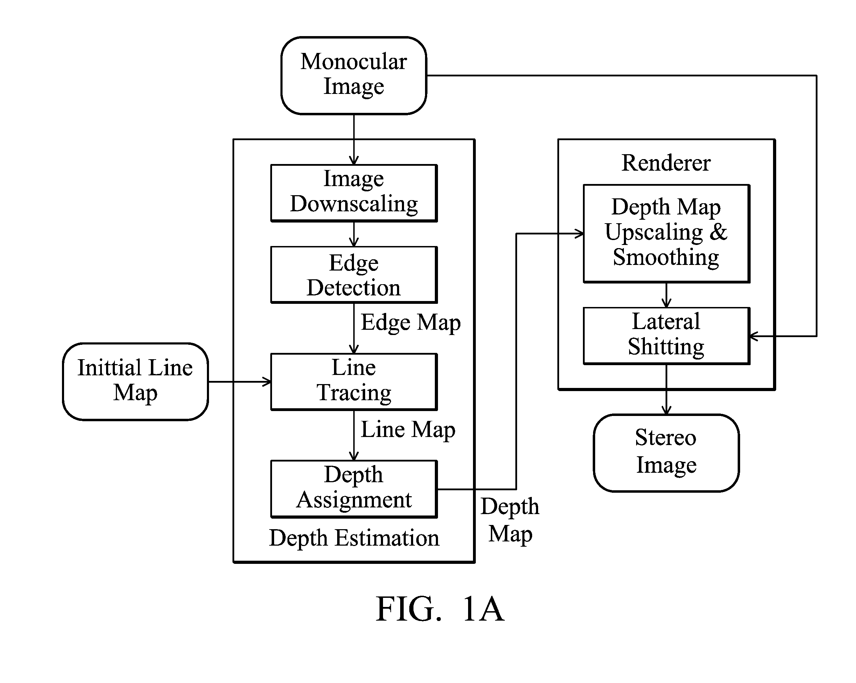

As the technology of stereoscopic image displaying devices develop, the techniques for processing stereoscopic images have become more and more crucial. Generally, the stereoscopic images can be obtained in several ways. For example, stereoscopic images can be captured by a depth camera capable of retrieving depth information, or captured by dual cameras capable of simulating human eyes, or converted from two-dimensional images through appropriate image processing means. FIG. 1A illustrates a flow chart of conventional algorithms for conversion of a two-dimensional image to a stereoscopic image. As illustrated in FIG. 1A, the processing procedure for converting a two-dimensional image to a stereoscopic image can be roughly classified as having some steps of: image shrinking, edge detection, line tracing, depth assignment, depth image enlargement and smoothing, and lateral shifting. When the depth image is built, the depth image can be combined with the original two-dimensional image to generate a stereoscopic image. In conventional algorithms for converting a two-dimensional image to a stereoscopic image, some methods can be used, such as building a space model, edge detection, and calculating disappearing points, which may build the depth image by analyzing one or more images.

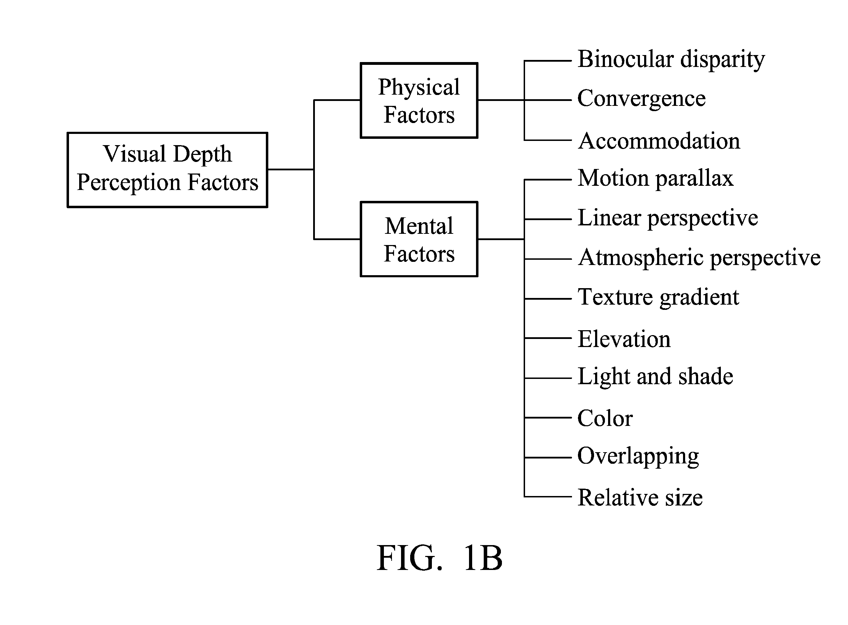

FIG. 1B illustrates a diagram of the visual depth perception factors. As illustrated in FIG. 1B, the visual depth perception factors can be classified as physical factors and mental factors. Generally, only some mental factors are used in the algorithm operations of the depth image corresponding to the stereoscopic image converted from a two-dimensional image. For example, yellow objects, objects with a great amount of motion, or large objects are usually considered as objects with the least depth due to the mental factors. Contrarily, blue objects, objects with a small amount of motion, or small objects are usually considered as objects with the deepest depth due to the mental factors, and objects with similar textures are considered as having the same depth.

The depth information is the key factor in stereoscopic image display technologies. After the depth image is generated, only the relative relationship between each object in the image can be defined. However, conventional stereoscopic image display technologies usually focus on ways for generating the correct depth information without using the depth information further to process the stereoscopic image.

### BRIEF SUMMARY OF THE INVENTION

A detailed description is given in the following embodiments with reference to the accompanying drawings.

In an exemplary embodiment, a dynamic depth image generating method is provided. The method comprises the following steps of: receiving at least one input image; determining whether a current image of the input images is a still image; and when the current image is the still image, retrieving a depth image corresponding to the current image and applying a plurality of image profiles to the depth image to generate a plurality of dynamic depth images.

In another exemplary embodiment, a stereoscopic image display apparatus is provided. The apparatus comprises: a depth analyzer configured to receive at least one input image, and determine whether a current image of the input images is a still image, wherein when the current image is the still image, the depth analyzer retrieves a depth image corresponding to the current image; and a depth-time calculating unit configured to apply a plurality of image profiles to the depth image to generate a plurality of dynamic depth images.

In yet another exemplary embodiment, an image adjusting method applied in a stereoscopic image display apparatus is provided. The method comprises the following steps of: receiving a first image and a first depth image corresponding to the first image; dividing the first depth image into at least two groups; applying a depth parameter to each group of the first depth image correspondingly to generate a second depth image; and generating an output image according to the first image and the second depth image.

In yet another exemplary embodiment, an image generating apparatus is provided. The apparatus comprises: an image classifier configured to receive a first image and a first depth image corresponding to the first image, and divide the first depth image into at least two groups; an image adjusting unit configured to apply a depth parameter to each group of the first depth image correspondingly to generate a second depth image; and a stereoscopic image rendering unit configured to generate an output image according to the first image and the second depth image.

In yet another exemplary embodiment, an image adjusting method applied in an image generating apparatus is provided. The method comprises the following steps of: receiving a first image and a first depth image corresponding to the first image; dividing the first depth image into at least two groups; dividing the first image into the at least two groups according to the at least two groups in the first depth images; applying an image parameter to the at least two groups in the first image to generate a second image; and generating an output image according to the second image.

In yet another exemplary embodiment, an image generating apparatus is provided. The apparatus comprises: an image classifier configured to receive a first image and a first depth image corresponding to the first image, and divide the first depth image into at least two groups, wherein the image classifier divides the first image into the at least two groups according to the at least two groups in the first depth image; an image adjusting unit configured to apply an image parameter to each group of the first image correspondingly to generate a second image; and a stereoscopic image rendering unit configured to generate an output image according to the second image.

In yet another exemplary embodiment, an image adjusting method applied in an image generating apparatus is provided. The method comprises the following steps of: receiving a first image and a first depth image corresponding to the first image; dividing the first depth image into at least two groups; receiving an external control signal indicating a relative position between a user and a display apparatus; when the relative position changes, applying a depth parameter to each group of the first depth image to generate a second depth image; and generating an output image according to the first image and the second depth image.

In yet another embodiment, an image generating apparatus is provided. The apparatus comprises: an image classifier configured to receive a first image and a first depth image corresponding to the first image, and divide the first depth image into at least two groups; an image adjusting unit configured to receive an external control signal indicating a relative position between a user and a display apparatus, wherein when the relative position changes, the image adjusting unit applies a depth parameter to each group of the first depth image correspondingly to generate a second depth image; and a stereoscopic image rendering unit configured to generate an output image according to the first image and the second depth image.

### BRIEF DESCRIPTION OF THE DRAWINGS

The present invention can be more fully understood by reading the subsequent detailed description and examples with references made to the accompanying drawings, wherein:

FIG. 1A illustrates a flow chart of conventional algorithms for converting a two-dimensional image to a stereoscopic image;

FIG. 1B illustrates a diagram of the visual depth perception factors;

FIG. 2 illustrates a block diagram of a conventional stereoscopic image display apparatus for converting a two-dimensional image to a stereoscopic image;

FIG. 3 illustrates a block diagram of the stereoscopic image display apparatus according to an embodiment of the invention;

FIG. 4 illustrates a block diagram of the stereoscopic image display apparatus according another embodiment of the invention;

FIG. 5 illustrates a flow chart of the dynamic depth image generating method according to an embodiment of the invention;

FIG. 6 illustrates a diagram of the dynamic depth image according to an embodiment of the invention;

FIG. 6A illustrates a chart of image profiles according to an embodiment of the invention.

FIG. 7 illustrates a block diagram of an image generating apparatus according to an embodiment of the invention;

FIG. 8A illustrates a diagram of the depth image divided by the region-based method according to an embodiment of the invention;

FIG. 8B illustrates a diagram of the depth image divided by the depth-based method according to an embodiment of the invention;

FIG. 8C illustrates a diagram of the depth image divided by the object-based method according to an embodiment of the invention;

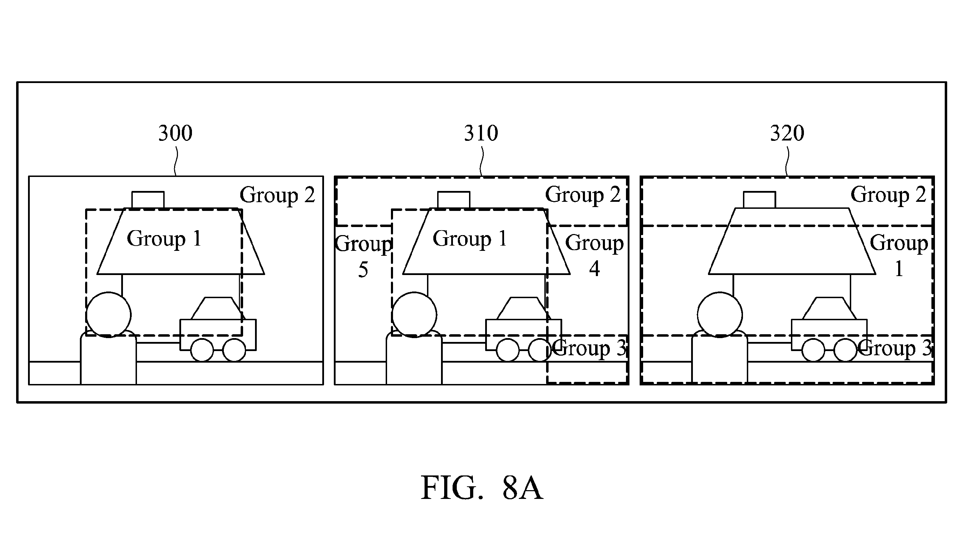

FIG. 8A illustrates a diagram of the covered objects in the depth image according to an embodiment of the invention;

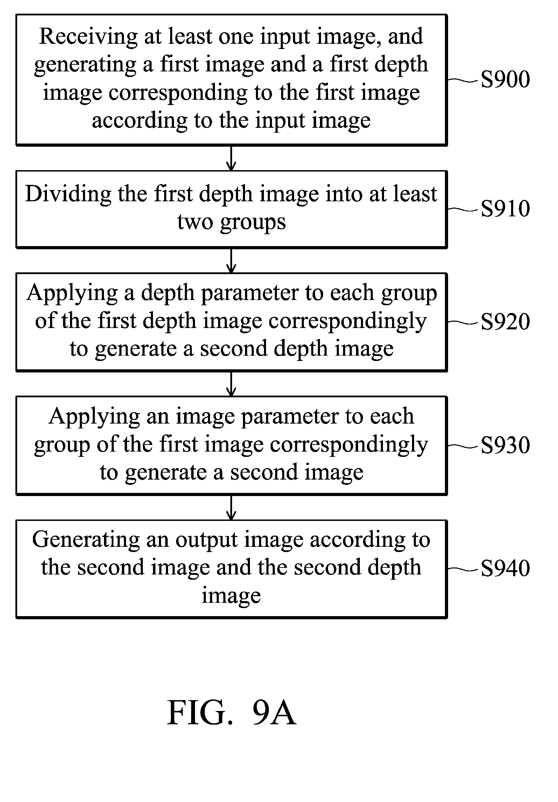

FIGs. 9A∼9C illustrate flow charts of the image adjusting method according to different embodiments of the invention.

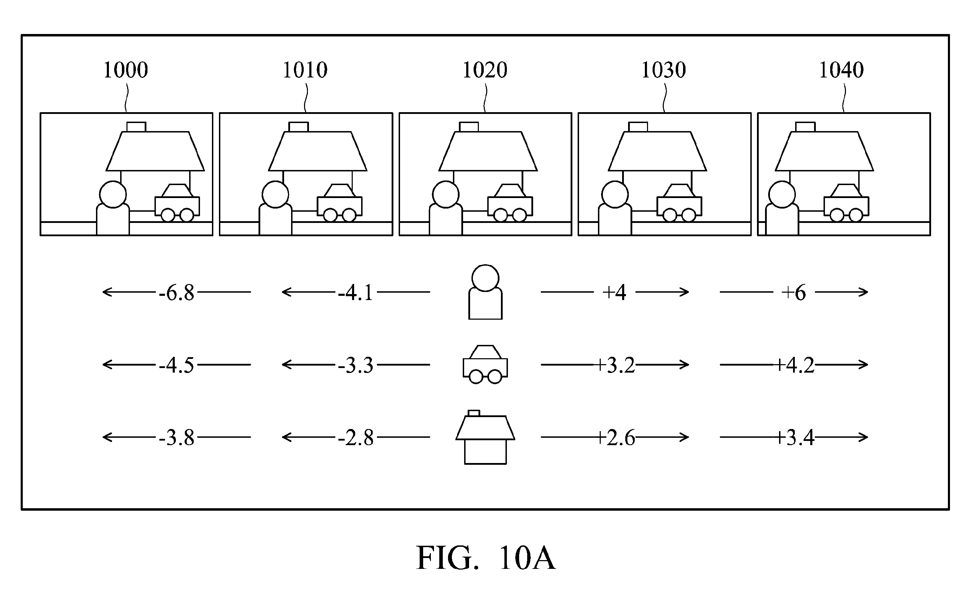

FIGs. 10A∼10B illustrate diagrams of adjusting the viewing position according to embodiments of the invention;

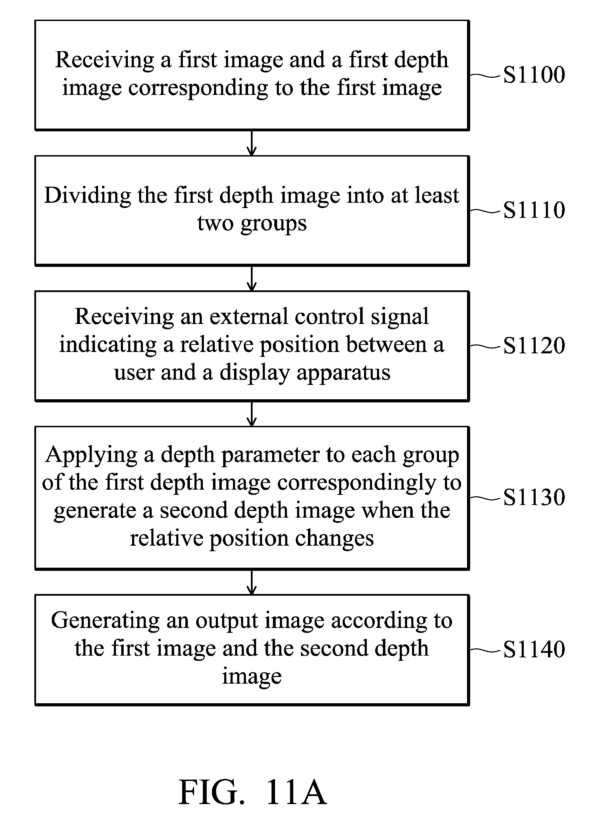

FIGs. 11A∼11B illustrate flow charts of the image adjusting method according to different embodiments of the invention;

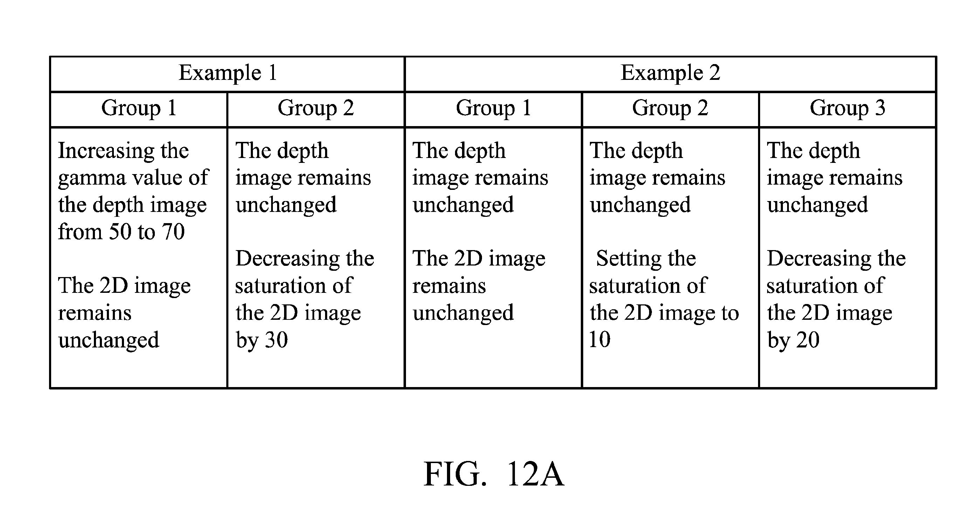

FIGs. 12A∼12B illustrate tables of the depth parameter and the image parameter according to different embodiments of the invention.

### DETAILED DESCRIPTION OF THE INVENTION

The following description is of the best-contemplated mode of carrying out the invention. This description is made for the purpose of illustrating the general principles of the invention and should not be taken in a limiting sense. The scope of the invention is best determined by reference to the appended claims.

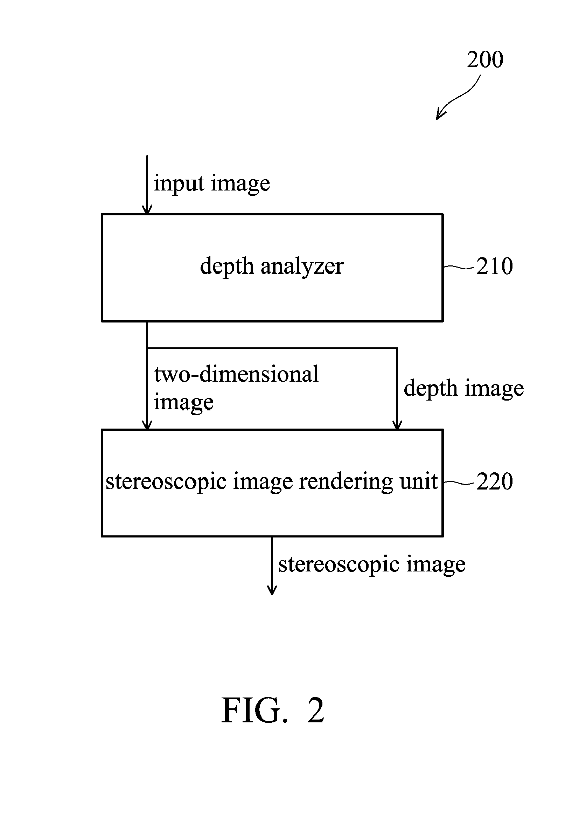

FIG. 2 illustrates a block diagram of a conventional stereoscopic image display apparatus for converting a two-dimensional image to a stereoscopic image. The conventional stereoscopic image display apparatus 200 may comprise a depth analyzer 210 and a stereoscopic image rendering unit 220. The depth analyzer 210 may receive a two-dimensional image, and generate a depth image corresponding to the two-dimensional image by using the conventional algorithms for converting a two-dimensional image to a stereoscopic image. Then, the stereoscopic image rendering unit 220 may output a stereoscopic image. Thus, when displaying a conventional two-dimensional film, two-dimensional images and corresponding depth images may be outputted by the conventional stereoscopic image display apparatus 200, thereby generating stereoscopic images. Generally, a depth image may be a gray level image with a range of gray levels (e.g. from 0 to 255) to represent various depth levels. For example, the gray level 255 may indicate that the object is closest to the lens, as well as the gray level 0 may indicate that the object is farthest to the lens. When the two-dimensional film is still or the content in the two-dimensional film remains unchanged, there is only one fixed depth image generated. Therefore, a user may only view monotonous images on the conventional stereoscopic display apparatus under such a condition.

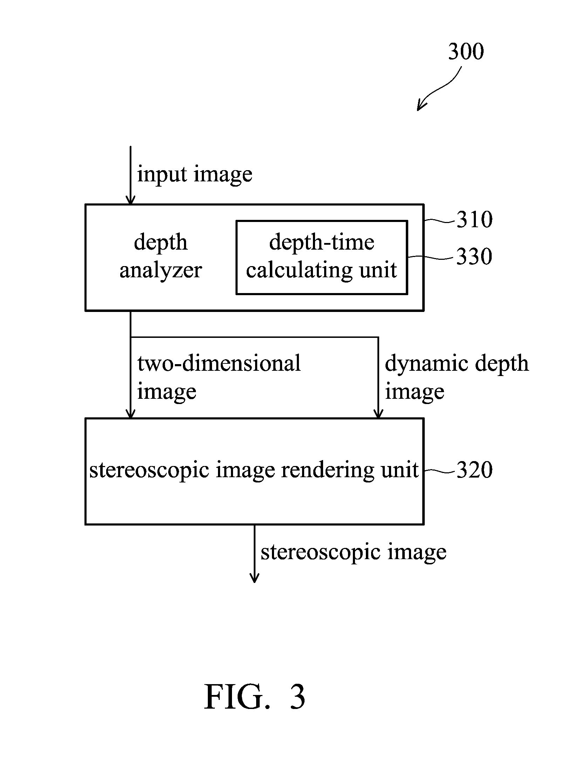

FIG. 3 illustrates a block diagram of the stereoscopic image display apparatus according to an embodiment of the invention. In the embodiment, the stereoscopic image display apparatus 300 may comprise a depth analyzer 310 and a stereoscopic image rendering unit 320. The depth analyzer 310 may further comprise a depth-time calculating unit 330, wherein the depth analyzer 310 is configured to receive at least one two-dimensional image and generate the two-dimensional images and depth images thereof. The depth-time calculating unit 330 is configured to insert time information to the depth information generated by the depth analyzer 310 simultaneously, and apply different image profiles to the depth images generated at different times to generate dynamic depth images. The stereoscopic image rendering unit 320 is configured to receive the two-dimensional images and the dynamic depth images generated by the depth analyzer 310, and display stereoscopic images. Thus, if the two-dimensional images inputted to the stereoscopic image display apparatus 300 are fixed or the content of the two-dimensional images remain unchanged, the stereoscopic image display apparatus 300 may output stereoscopic images with different depth levels over time, thereby increasing visual effects of the displayed stereoscopic images.

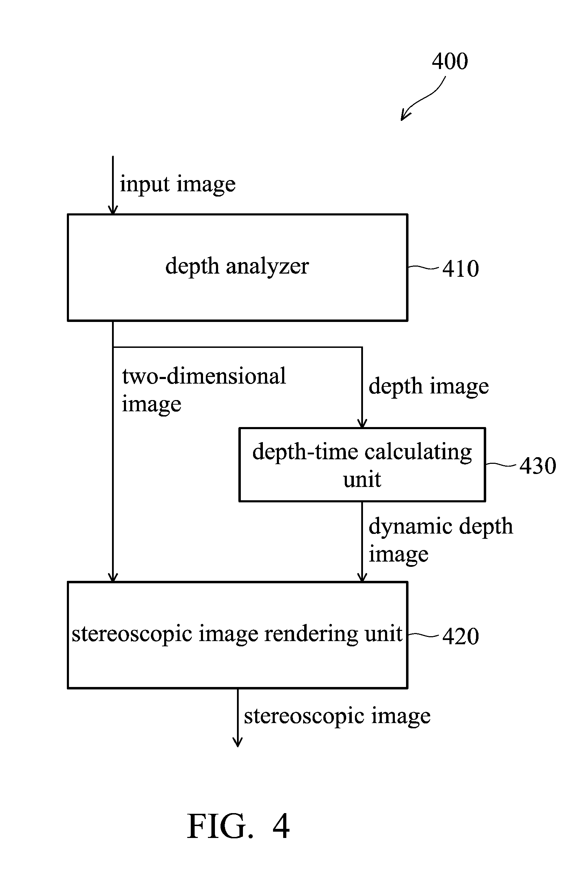

FIG. 4 illustrates a block diagram of the stereoscopic image display apparatus 400 according another embodiment of the invention. In the embodiment, the stereoscopic image display apparatus 400 may comprise a depth analyzer 410, a stereoscopic image rendering unit 420 and a depth-time calculating unit 430. It should be noted that the depth-time calculating unit 430 is a stand-alone unit independent of the depth analyzer 410. The depth analyzer 410 is configured to receive two-dimensional images and generate the two-dimensional images and corresponding depth images. The depth-time calculating unit 430 is configured to receive the depth images generated by the depth analyzer 410, and apply different image profiles to the depth images generated at different times to generate dynamic depth images. The stereoscopic image rendering unit 420 is configured to receive the two-dimensional images generated by the depth analyzer 410 and the dynamic depth images generated by the depth-time calculating unit 430, and display stereoscopic images. Thus, if the two-dimensional images inputted to the stereoscopic image display apparatus 400 are fixed or the content in the two-dimensional images remains unchanged, the stereoscopic image display apparatus 400 may output stereoscopic images with different depth levels over time, thereby increasing visual effects of the displayed stereoscopic images.

In an embodiment, the stereoscopic image display apparatuses 300 and 400 may be applied to devices capable of converting two-dimensional images to stereoscopic images or detecting the depth levels of the stereoscopic images, such as display devices or personal computers. The stereoscopic image display apparatuses 300 and 400 can be implemented by specific hardware or logic circuits, or executed by a processor in the form of program codes, but the invention is not limited thereto.

It should be noted that the depth analyzers 310 and 410 may further comprise an image buffer (not shown) in another embodiment. The depth analyzer 310 and 410 may store the current input image and the corresponding depth image in the image buffer, and determine whether the input images are still images before the depth-time calculating units 330 and 430 apply image profiles. When the depth analyzers 310 and 410 determine that the input images are still images, there are two ways for applying different image profiles to the depth images. First, when the input images are determined as still images, the depth-time calculating units 330 and 430 may apply an image profile to the depth image of the current input image, and transmit the current input image and the depth image thereof to the stereoscopic image rendering units 320 and 420. Then, the current input image and the depth image thereof are stored in the image buffer, so that the depth-image calculating units 330 and 430 may read the depth image from the image buffer, and apply different image profiles to the depth image over time. If the current input image of the input images is determined as a still image, the previous input image is generally a still image. Therefore, the second way is to retrieve the previous input image and the corresponding depth image stored in the image buffer, and to apply different image profiles to the corresponding depth image over time.

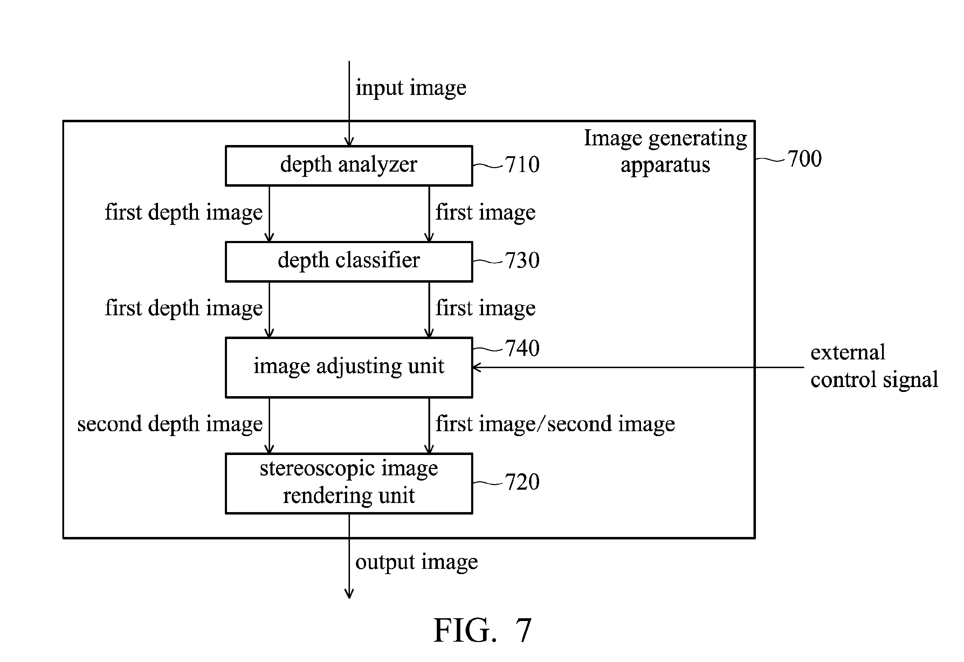

In the aforementioned embodiment, the chart of image profiles is illustrated in FIG. 7, wherein the content of each image profile can be preset and adjusted, such as parameters for adjusting depth images (e.g. brightness, gamma), a predetermined time interval, a predetermined number of images, or repeated patterns. The image parameters, such as contrast, brightness, gamma, sharpness, or noise reduction, can be used with each other to achieve different visual effects.

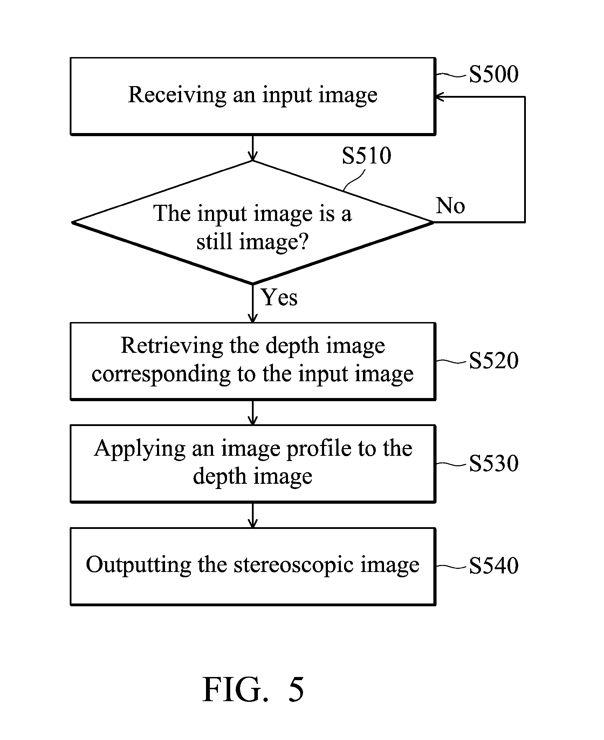

FIG. 5 illustrates a flow chart of the dynamic depth image generating method according to an embodiment of the invention. Referring to FIG. 4 and FIG. 5, in step S500, the depth analyzer 410 receives input images, and determines the format of the input images. For example, the input images can be pure two-dimensional images or stereoscopic images (i.e. two-dimensional images with corresponding depth images), and the depth analyzer 410 may be set to a stereoscopic mode or a two-dimensional mode. In the stereoscopic mode, if the depth analyzer 410 receives pure two-dimensional images, the depth analyzer 410 may generate the depth images corresponding to the two-dimensional images by using an appropriate algorithm for converting two-dimensional images to stereoscopic images. If the depth analyzer 410 receives stereoscopic images (i.e. two-dimensional images with corresponding depth images), the depth analyzer 410 still outputs two-dimensional images and corresponding depth images. In view of the above, in the stereoscopic mode, it does not matter whether the depth analyzer 410 receives pure two-dimensional images or stereoscopic images (i.e. two-dimensional images with corresponding depth images), the depth analyzer 410 may still determine whether the input images are still images (step S510). If the input images are still, the depth analyzer 410 may output the two-dimensional images and the corresponding depth images, and step S520 is executed. If the input images are not still, step S500 is performed to receive input images. In step S520, the depth-time calculating unit 430 may read the depth images generated by the depth analyzer 410 from the image buffer. In step S530, the depth-time calculating unit 430 may apply the image profiles to the depth images correspondingly (i.e. over time) to generate dynamic depth images. In step S540, the stereoscopic image rendering unit 420 may output stereoscopic images (e.g. left eye images and corresponding right eye images) according to the two-dimensional images generated by the depth analyzer 410 and the dynamic depth images generated by the depth-time calculating unit 430.

In another embodiment, there are multiple ways to determine whether the input image is a still image. For example, the depth analyzer 410 may calculate the histogram of the gray levels of the input image. If there is no variation in the histogram, the input image can be determined as a still image. Alternatively, if all the pixels in the input image are not updated, the input image can be determined as a still image. The depth analyzer 410 may receive an image pause signal from an image display apparatus (not shown) to obtain the status of stopping displaying images (e.g. the user presses the "pause" button on a remote controller), and the depth analyzer 410 may determine that the input image is a still image. In addition, the display apparatus may stop transmitting the input image, and thus the depth analyzer 410 may receive an image pause signal from the display apparatus to determine that the input image is a still image, but the invention is not limited thereto.

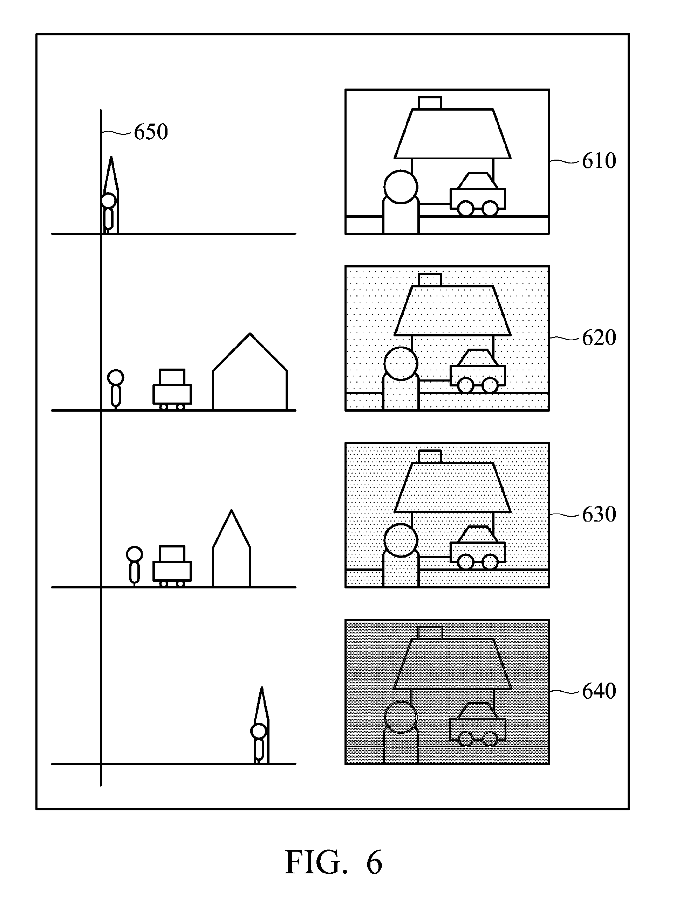

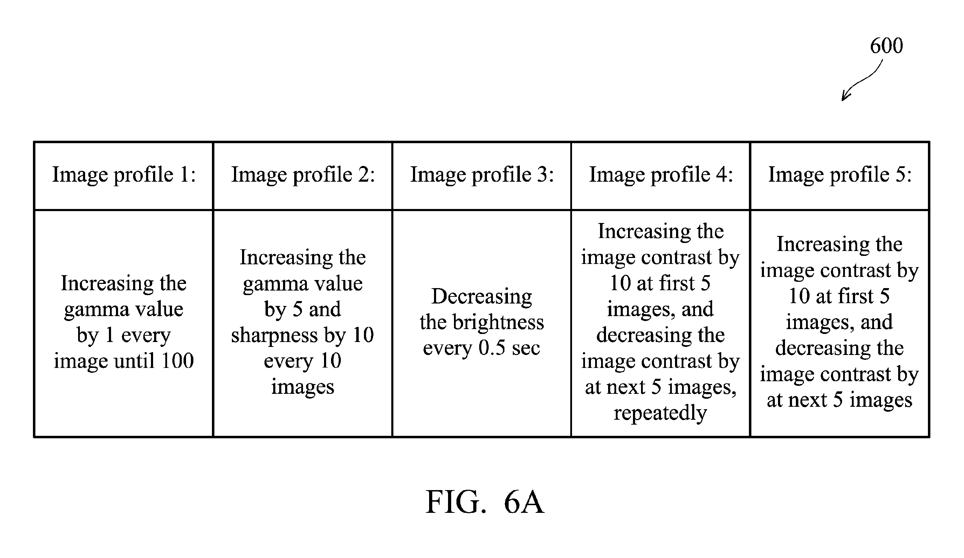

FIG. 6 illustrates a diagram of the dynamic depth image according to an embodiment of the invention. Referring to both FIG. 4 and FIG. 6, in yet another embodiment, the depth image and the dynamic depth image are illustrated in the right portion of FIG. 6. The left portion of FIG. 6 illustrates a diagram of the depth perception of the user for the stereoscopic image composed of the two-dimensional image with the depth image or the dynamic depth image. The depth-time calculating unit 430 may generate dynamic depth images 610, 630 and 640 according to the original depth image 620, wherein the depth image 620 corresponds to the original stereoscopic image. All the gray levels of the depth image 610 are adjusted to 255 by the depth-time calculating unit 430, and it may indicate that the content of the depth image has no depth information. That is, the two-dimensional image is still a pure two-dimensional image when combined with the dynamic depth image 610. When the user observes the screen from the left side of the screen surface 650 (i.e. in front of the screen surface 650 actually), the user may perceive that the two-dimensional image is displayed on the screen surface 650. When all of the gray levels of the dynamic depth image 640 are adjusted to zero by the depth-time calculating unit 430, the user may perceive that all the objects are located at the same depth level in the stereoscopic image, which is generated by combining the two-dimensional image with the dynamic depth image 640. Further, the gray levels of the dynamic depth image 620 are slightly adjusted, so that the gray levels of the dynamic depth image 620 are within a smaller range, and thus the user may perceive that the variations of the depth levels of objects in the stereoscopic image are less than those in the original stereoscopic image.

In an embodiment, when the user views a stereoscopic game (not converted from two-dimensional images) and pauses the input images, the depth-time calculating unit 430 may know that the input images are still images, and then apply different image profiles to the depth image to adjust the gray levels of the depth image to 255 and increase the contrast of the depth image. Meanwhile, the user may perceive that the displayed content may be two-dimensional and then become more stereoscopic, and the depth levels may become deeper, as if the whole image is activated.

In another embodiment, when the user views stereoscopic images and pauses the input images, the depth-time calculating unit 430 may know that the input images are still images, and apply different image profiles to the depth images to adjust gray levels of the depth image to 255 and decrease the gray levels of the depth image to zero gradually, where the cycle is repeated for a predetermined number of times (e.g. 10 times). Meanwhile, the user may perceive that the displayed content may be two-dimensional and become more stereoscopic, and the range of depth levels may become larger. Then, the range of depth levels may become smaller, and the objects in the stereoscopic image moves to the deepest place of the screen, where the cycle is repeated for a predetermined number of times, as if the whole image is activated.

In yet another embodiment, given that the user views two-dimensional pictures (no conversion from two-dimensional images to stereoscopic images), since the two-dimensional pictures are still images, the depth-time calculating unit 430 may know that the input images are still images and apply different image profile to the depth images. For example, the depth-time calculating unit 430 may display the original depth image, adjust the gray levels of the depth image to 128, and then adjust the gray levels of the depth image to 255 gradually. Meanwhile, the user may perceive that the displayed content may be stereoscopic with a wide range of depth levels. Secondly, the range of depth levels may become smaller and the objects of the displayed content may be located in the deepest place of the screen. At last, the objects may move to the surface of the display screen gradually.

FIG. 7 illustrates a block diagram of an image generating apparatus according to an embodiment of the invention. The image generating apparatus 700 may comprise a depth analyzer 710 and a stereoscopic image rendering unit 720. The depth analyzer 710 is configured to receive at least one input image (e.g. a pure two-dimensional image or a stereoscopic image), and generate a two-dimensional image and a corresponding depth image according to the input image, thereby generating a corresponding stereoscopic image. The stereoscopic image rendering unit 720 may receive the two-dimensional image and the corresponding depth image generated by the depth analyzer 710 and generate a corresponding stereoscopic image. In an embodiment, the image generating apparatus 700 may further comprises a depth classifier 730 and an image adjusting unit 740. The depth classifier 730 is configured to divide the content of the depth image into a plurality of groups (or regions) according to the image features of the depth image, wherein each group may comprise a group number and pixels corresponding to the group number (or the groups corresponding to each pixel). The image adjusting unit 740 is configured to retrieve the group numbers, depth parameters and image parameters through a determination mechanism or by receiving an external control signal. Before the stereoscopic image rendering unit 720 renders stereoscopic images, the image adjusting unit 740 may adjust the depth image or the two-dimensional image according to the retrieved depth parameters and the image parameters, so that the stereoscopic images rendered by stereoscopic image rendering unit 720 may have different variations.

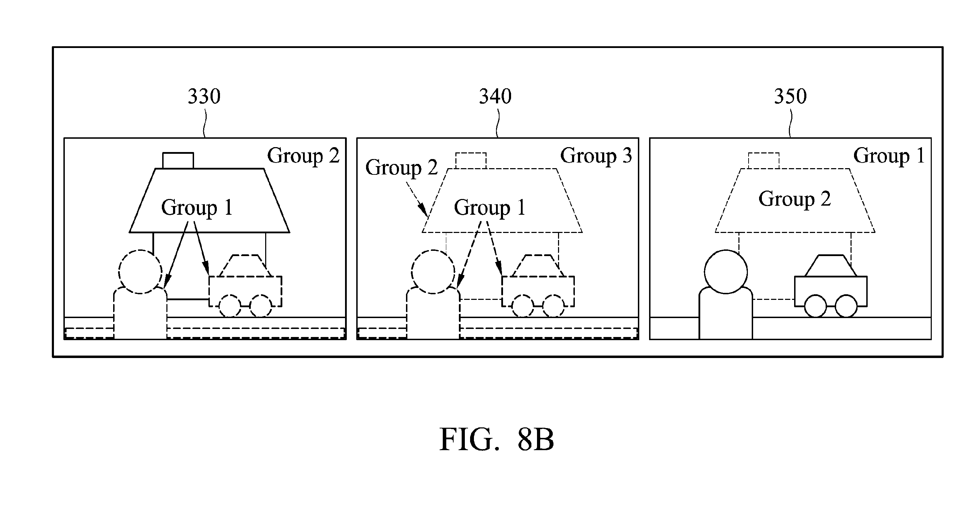

In another embodiment, there are three ways for the depth classifier 730 to divide the content of the depth image into a plurality of groups. The first way is a region-based method, which indicates that the depth image is divided by various two-dimensional spaces. For example, if the size of the image is 1920x1080 pixels, the groups of the depth image can be divided into three groups, such as (1) 1/4 upper portion, 1/2 middle portion, and 1/4 bottom portion of the depth image (as illustrated in the depth image 320 of FIG. 8A); (2) a region in the center of the depth image with the width of 800 pixels and the height of 500 pixels, and the remaining portion as another region (e.g. the depth image 300 in FIG 8A); or (3) regions divided from the depth image according to a predetermined region location (e.g. the depth image 310 in FIG. 8A), but the invention is not limited thereto. The second way is a depth-based method, which indicates performing analysis to the depth image and retrieving the groups corresponding to specific gray levels (i.e. a predetermined range of depth levels). For example, the depth image is generally a gray image. In an embodiment, the depth classifier 730 may capture areas from the depth image with the gray levels between from 180 to 255, label these areas as a region, and label the remaining portion of the depth image as another region. The depth images 830, 840, and 850 in FIG. 8B may illustrate the divided regions corresponding to a different range of gray levels, but the invention is not limited thereto.

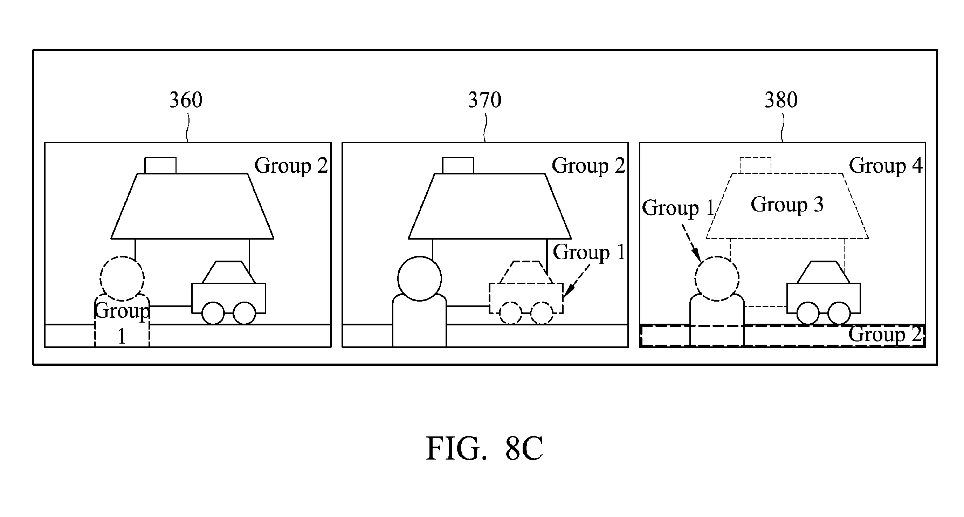

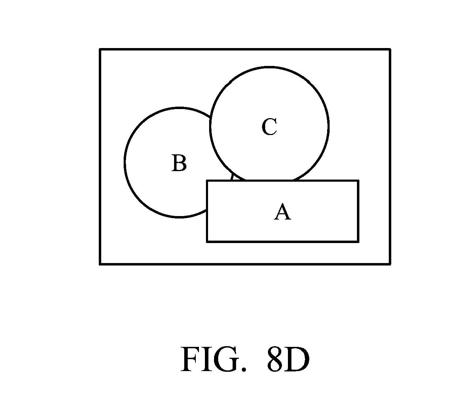

The third way is an object-based method, which indicates that the depth classifier 730 may detect the global depth levels of the depth image, and divide the depth image into the foreground objects and the background objects through foreground detection. Alternatively, the depth classifier 730 may detect the movement of regions with the same range of depth levels to obtain the dynamic objects or repeated objects, such as objects with larger motion, objects with smaller motions, and still objects. For example, as illustrated in FIG. 8C, the depth classifier 730 may divide different objects into different groups according to the motion of each object. In the depth images 860, 870 and 880, the person, the car and the ground are the foreground objects. As illustrated in FIG. 8D, the object A may cover up objects B and C in the depth image (i.e. occlusion), and the depth classifier 730 may know that the object A is the foreground object according to the relative relationship of these objects. Reference may be made to related image processing techniques for the object recognition methods. The techniques for covering recognition and motion recognition are used in the invention, but the invention is not limited thereto.

In yet another embodiment, the depth classifier 730 may further combine the region-based method and the depth-based method to divide the groups in the depth image. For example, the depth classifier 730 may search for a specific range of depth levels (e.g. the gray level are within the range between from 150 to 200) within the center region of the depth image 800 in FIG. 8A to divide groups. The depth classifier 730 may use the intersection regions of the regions divided by both the region-based method and the depth-based method. Also, the depth classifier 730 may further use any combination of the object-based method, the region-based method, and the depth-based method to divide groups from the depth image, but the invention is not limited thereto.

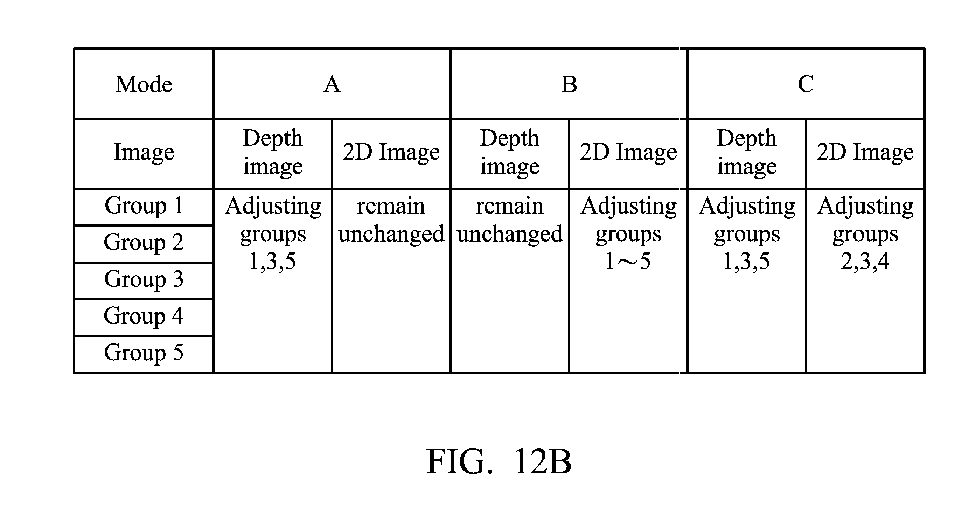

In an embodiment, after the depth classifier 730 divides the depth image into different regions, the depth analyzer 730 may obtain the corresponding group (or corresponding group regions) in the two-dimensional image for each group in the depth image. The image adjusting unit 740 may apply a depth parameter to each group in the depth image, and/or apply an image parameter to each group in the two-dimensional image corresponding to the depth image. That is, the image adjusting unit 740 may adjust the depth image and/or the two-dimensional image. For example, the depth parameters are for adjusting the depth image, such as the contrast, brightness, gamma, sharpness, or noise reduction of the depth image. The image parameters are for adjusting the two-dimensional image, such as the contrast, brightness, gamma, sharpness, noise reduction, saturation, color tone, R/G/B gains, R/G/B offset, or the motion and zooming of the two-dimensional image, but the invention is not limited thereto. In another embodiment, the adjusting parameters for the depth image and the two-dimensional image can be adjusted in each region independently. That is, each region may have a set of independent adjusting parameters. The image adjusting unit 740 may select specific or corresponding depth parameters, image parameters, or image profiles according to the analyzing results or an external signal (e.g. a signal outputted from the scalar, a signal outputted from an external senor or an environment apparatus (e.g. a light sensor), or an external signal from still image detection). As illustrated in FIGs. 12A and 12B, in different embodiments, different group adjusting parameters (including depth parameters and image parameters) can be applied to different groups in the depth image and the two-dimensional image. Alternatively, the same group adjusting parameters can be applied to all the groups of the depth image and/or the two-dimensional image, but the invention is not limited thereto.

In an embodiment, when the user views a stereoscopic film (converted from two-dimensional images), the depth analyzer 710 may analyze the depth levels of the content in each two-dimensional image. When an primary object is detected (e.g. a car) moving from right to left continuously at the 1st∼10th images and the depth level is in the middle, the depth classifier 730 may further detect another primary object (e.g. the person) with less motion. Thus, the primary object can be defined as the first group, and another primary object can be defined as the second group. The remaining portion of the depth image can be defined as the third group. The image adjusting unit 740 may apply a depth parameter to each region of the depth image correspondingly in the 1st∼10th images. For example, the range of depth levels of the first group can be adjusted from 120∼160 to 70∼140 for 10 images. The range of depth levels of the second group is adjusted from 0-40 to 20-40 for 10 images. The range of depth levels of the third group is adjusted from 160∼255 to 220-255 for 10 images. The image adjusting unit 740 may further apply an image parameter to each region of the two-dimensional image, such as increasing the saturation of the first group, sustaining the second group, and blurring the third group. By adjusting the depth image and the two-dimensional image, the moving car in the stereoscopic image may become clearer with obvious depth levels, and the background may be blurred with a deeper depth level, and the image quality for the person may remain unchanged with a slightly deeper depth level.

In another embodiment, when the user views a three-dimensional game (not converted from two-dimensional images) and pauses input images, the depth analyzer 710 may determine that the input images are still images. Then, the depth classifier 730 may divide the depth image into groups, such as dividing the main character (i.e. an approaching object) of the three-dimensional game to the first group, and dividing the remaining portion of the image to the second group. The image adjusting unit 740 may further apply a depth parameter to each group of the depth image correspondingly. For example, the image adjusting unit 740 may increase the gamma value of the first group of the depth image, and set the gray levels of the second group of the depth image to zero. In addition, the image adjust unit 740 may keep the first group in the two-dimensional image unchanged, and set the second group in the two-dimensional image as a gray-level sub-image. Therefore, the main character in the paused three-dimensional game may be outward to the screen, and the other content may be a gray level sub-image located in the deepest place of the screen.

FIGs. 9A∼9C illustrate flow charts of an image adjusting method according to different embodiments of the invention. Referring to FIG. 9A, in step S900, the depth analyzer 710 may receive at least one input image, and generate a first image and a first depth image corresponding to the first image according to the input image, wherein the input image can be a pure two-dimensional image or a stereoscopic image. The stereoscopic image can be a two-dimensional image and a corresponding depth image, or a left eye image and a corresponding right eye image, wherein the depth image can be generated by analyzing the left/right eye images. In step S910, the depth classifier 730 may divide the first depth image into at least two groups, and divide the first image into the at least two groups correspondingly according to the groups of the first depth image, wherein the region-based, depth-based, and/or object-based method can be used to divide the first depth image and the first image into the groups. In step S920, the image adjusting unit 740 may apply a depth parameter to each group of the first depth image correspondingly to generate a second depth image. In step S930, the image adjusting unit 740 may apply an image parameter to each group of the first image correspondingly to generate a second image. In step S940, the stereoscopic image rendering unit 720 may generate an output image according to the second image and the second depth image, and display the output image on a display apparatus (not shown in FIG. 7).

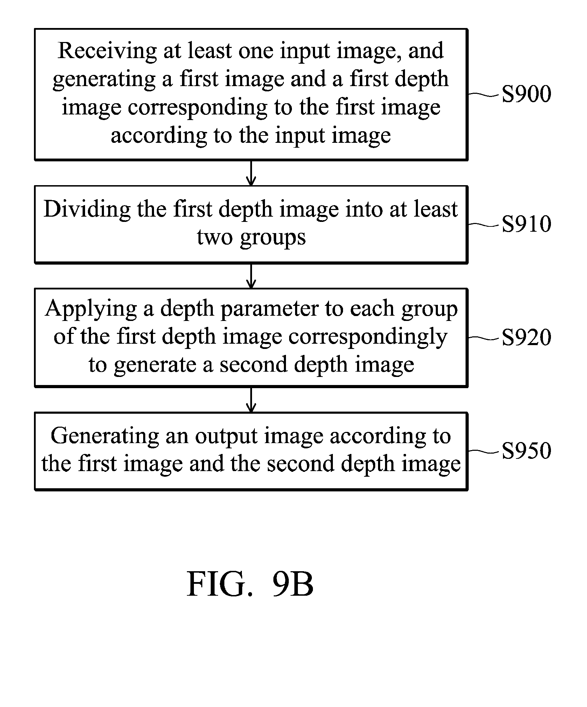

FIG. 9B illustrates a flow chart of the image adjusting method according to another embodiment of the invention. The difference between FIG. 9B and FIG. 9A is that only the depth image is adjusted in the procedure in FIG. 9B. Thus, in step S950, the stereoscopic image rendering unit 720 may generate an output image according to the first image and the second depth image.

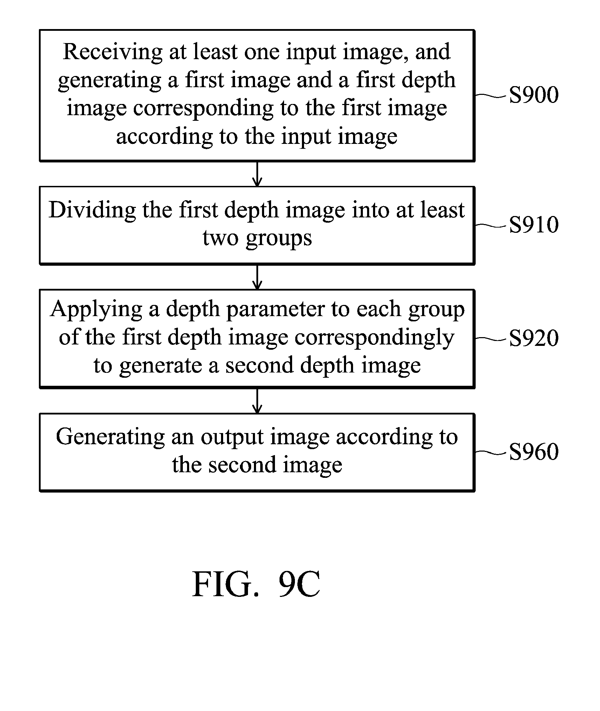

FIG. 9C illustrates a flow chart of the image adjusting method according to yet another embodiment of the invention. The difference between FIG. 9C and FIG. 9A is that only the first image is adjusted in the procedure in FIG. 9C. Thus, in step S960, the stereoscopic image rendering unit 720 may generate an output image according to the first image. It should be noted that, the output image in FIGs. 9A∼9C can be a two-dimensional image or a stereoscopic image, and the display apparatus for displaying the output image is capable of receiving the two-dimensional image and the stereoscopic image.

FIG. 10A illustrates a diagram for adjusting the viewing position according to an embodiment of the invention. Since the content of the images viewed by the user on the display apparatus is two-dimensional, the depth classifier 730 may use the image adjusting methods described in the embodiments of FIGs. 9A∼9C to divide the content of the images into groups (or regions) when the user is viewing the film in front of the display apparatus. However, when the relative position between the user and the display apparatus changes (e.g. the user moves left, right, forward, or backward, or the display apparatus is moved), the image content viewed by the user may also be moved according to the change of the relative position. In addition, the image adjusting unit 740 may adjust the offset for the each group or region, respectively. For example, when the user moves, the moving distance of the group with a deeper depth level is relatively shorter and the moving distance of the group with a less depth level is relatively longer. In an embodiment, the image adjusting unit 740 may receive an external control signal indicating the relative relationship between the user and the display apparatus (e.g. the offset value in the up/down/left/right directions, the angle, and the distance, etc.). In another embodiment, the external control signal may be generated by an image detection apparatus (e.g. a camera, not shown in FIG. 7), and the image detection apparatus may detect the relative movement between the user and the display apparatus. When the relative movement is larger than a predetermined distance, the image detection apparatus may send the external control signal to the image adjusting unit 740, and keep detecting repeatedly.

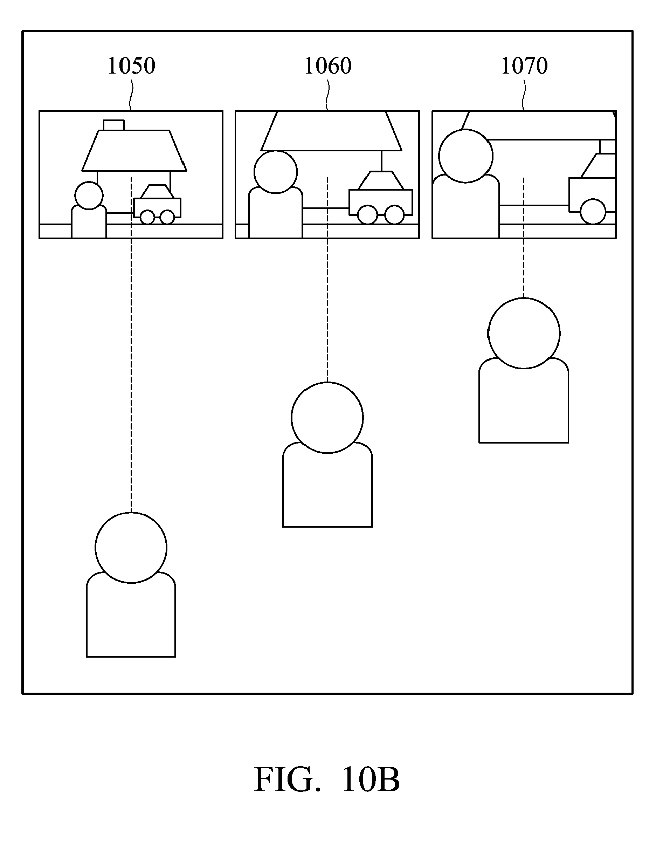

In an embodiment, as illustrated in FIG. 10A, the depth image 1020 may indicate the depth image corresponding to the image viewed by the user in front of the image generating apparatus 700, wherein the depth level of the house is deepest, and the depth level of the person is lowest, and the depth level of the car is in the middle between that of the house and the person. As illustrated in the depth images 1010 and 1000, when the user moves toward left direction, the user may see that the objects in the image move relatively toward a right direction. The moving distances of the house and the car are relatively shorter than that of the person. As illustrated in the depth images 1030 and 1040, when the user moves toward right, the user may see that the objects in the image move relatively toward the left. In another embodiment, as illustrated in FIG. 10B, the depth image 1060 may be the depth image corresponding to the image viewed by the user at a common distance. As illustrated in the depth image 1050, when the user moves backward, the image adjusting unit 740 may shrink all the groups in the depth image, so that the user may see that all the objects in the image have become relatively smaller. As illustrated in the depth image 1070, when the user moves forward, the image adjusting unit 740 may enlarge all the groups in the depth image, and the user may see that all the objects in the image have become relatively larger. In the aforementioned embodiments, the movement of the user can be regarded as moving along a direction parallel to the normal of the screen of the image generating apparatus 700 or moving along a direction perpendicular to that of the screen of the image generating apparatus 700. When the moving direction of the user is perpendicular to the normal of the image generating apparatus 700, the external control signal can be accordingly adjusted, so that the image adjusting unit 740 may adjust the groups in the depth image to move toward a contrary direction of the moving direction of the user. If the moving direction of the user is parallel to the normal of the image generating apparatus 700, the external control signal can be accordingly adjusted when the user is approaching the image generating apparatus 700, so that the image adjusting unit 740 may enlarge the groups in the depth image. Contrarily, when the user moves away from the stereoscopic image display apparatus, the external control signal can be accordingly adjusted, so that the image adjusting unit 740 may shrink the groups in the depth image. In the aforementioned embodiments, the moving direction of the user can be up, down, left or right, and the user may also approach or move away from the image generating apparatus 700 (i.e. moving forward/backward). The image adjusting unit 740 may adjust the groups in the depth image accordingly, but the invention is not limited thereto.

FIGs. 11A∼11B illustrate flow charts of the image adjusting method according to different embodiments of the invention. Referring to FIG. 11A, in step S1100, the depth analyzer 710 may receive at least one input image, and generate a first image and a first depth image corresponding to the first image according to the input image, wherein the input image may be a pure two-dimensional image or a stereoscopic image (i.e. a two-dimensional image and a corresponding depth image). In step S1110, the depth classifier 730 may divide the first depth image into at least two groups, wherein the region-based, depth-based, and/or object-based methods can be used for dividing the groups. In step S1120, the image adjusting unit 740 may receive an external control signal indicating a relative position between a user and the stereoscopic image display apparatus displaying the first depth image. In step S1130, when the relative position changes, the image adjusting unit 740 may correspondingly apply a depth parameter to each group of the first depth image correspondingly to generate a second depth image. In step S1140, the stereoscopic image rendering unit 720 may generate an output image according to the first image and the second depth image. It should be noted that the output image generated by the stereoscopic image rendering unit 720 can be a stereoscopic image or a two-dimensional image.

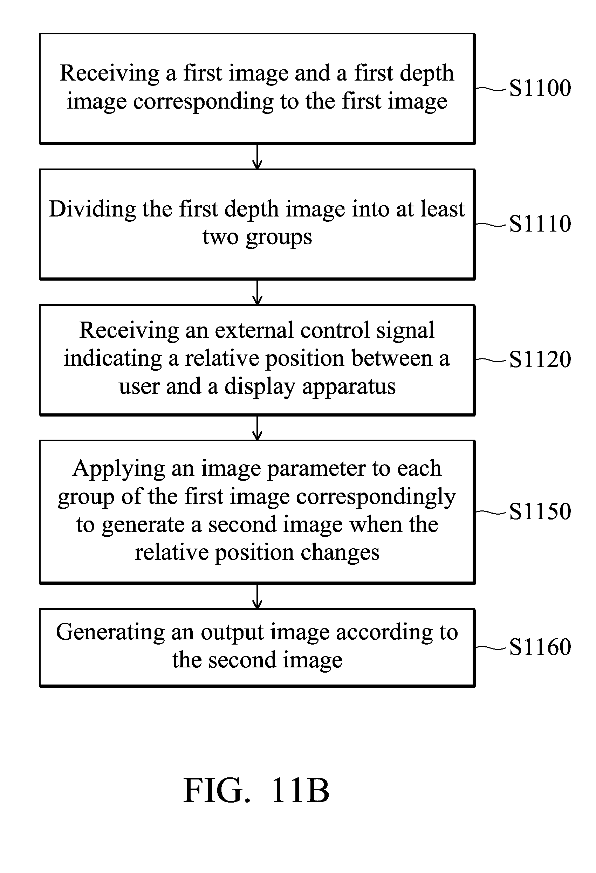

The difference between the steps of FIG. 11B and FIG. 11A is that in step S1150, the image adjusting unit 740 may apply an image parameter to each group of the first image to generate a second image, and the stereoscopic image rendering unit 720 may generate an output image according to the second image. For those skilled in the art, it should be appreciated that the image generating apparatus 700 may adjust the groups of the depth image and/or the two-dimensional image to generate an output image (a stereoscopic image or a two-dimensional image). The stereoscopic image and/or the two-dimensional image can be displayed on at least one display apparatus (i.e. the stereoscopic image and/or the two-dimensional image can be outputted simultaneously), and the display apparatus is capable of receiving the stereoscopic image or the two-dimensional image. The steps of FIGs. 11A and 11B is similar to that of FIGs. 9A∼9C. The difference is that the first image and/or the first depth image are adjusted according to the external control signal in FIGs. 11A and 11B.

While the invention has been described by way of example and in terms of the preferred embodiments, it is to be understood that the invention is not limited to the disclosed embodiments. To the contrary, it is intended to cover various modifications and similar arrangements (as would be apparent to those skilled in the art). Therefore, the scope of the appended claims should be accorded the broadest interpretation so as to encompass all such modifications and similar arrangements.

## Claims

1. A dynamic depth image generating method, comprising receiving at least one input image;
determining whether a current image of the at least one input image is a still image; and
when the current image is the still image, retrieving a depth image corresponding to the current image and applying a plurality of image profiles to the depth image correspondingly to generate a plurality of dynamic depth images.

2. The dynamic depth image generating method as claimed in claim 1, wherein the step of determining whether the current image of the input images is the still images comprises:
receiving an image pause signal to determine whether the current image as the still image.

3. The dynamic depth image generating method as claimed in claim 1, wherein the step of determining whether the current image of the input images is the still image comprises:
calculating a first histogram of gray levels of the current image;
calculating a second histogram of gray levels of a previous image adjacent to the current image; and
determining the current image as the still image, when the first histogram and the second histogram are identical.

4. The dynamic depth image generating method as claimed in claim 1, wherein the step of determining whether the current image of the input images is the still image comprises:
determining the current image as the still image when all pixels of the current image and a previous image adjacent to the current image are identical.

5. The dynamic depth image generating method as claimed in claim 1, wherein the step of applying the image profiles to the depth images comprises:
applying the image profiles to the depth images according to a predetermined time interval or a predetermined number of images.

6. The dynamic depth image generating method as claimed in claim 1, further comprising:
generating stereoscopic images according to the current image and the dynamic depth images; and
displaying the stereoscopic images.

7. The dynamic depth image generating method as claimed in claim 1, wherein the input image is a stereoscopic image or a two-dimensional image.

8. A stereoscopic image display apparatus, comprising:
a depth analyzer configured to receive at least one input image, and determine whether a current image of the at least one input image is a still image, wherein when the current image is the still image, the depth analyzer retrieves a depth image corresponding to the current image; and
a depth-time calculating unit configured to apply a plurality of image profiles to the depth image to generate a plurality of dynamic depth images.

9. The stereoscopic image display apparatus as claimed in claim 8, wherein the depth analyzer further receives an image pause signal to determine whether the current image is the still image.

10. The stereoscopic image display apparatus as claimed in claim 8, wherein the depth analyzer further calculates a first histogram of gray levels of the current image and a second histogram of gray levels of a previous image adjacent to the current image, wherein when the first histogram and the second histogram are identical, the depth analyzer determines the current image is the still image.

11. The stereoscopic image display apparatus as claimed in claim 8, wherein when all pixels of the current image and a previous image adjacent to the current image are identical, the depth analyzer determines the current image is the still image.

12. The stereoscopic image display apparatus as claimed in claim 8, wherein the depth-time calculating unit applies the image profiles to the depth images according to a predetermined time interval or a predetermined number of images.

13. The stereoscopic image display apparatus as claimed in claim 8, wherein the depth-time calculating unit further generates stereoscopic images according to the current image and the dynamic depth images, and displays the stereoscopic images.

14. The stereoscopic image display apparatus as claimed in claim 8, wherein the input image is a stereoscopic image or a two-dimensional image.
